# EUROPEAN PATENT APPLICATION

(11) **EP 2 687 368 A1**
(43) Date of publication of application: **22.01.2014**
(21) Application number: 13176495.3
(22) Date of filing: 15.07.2013
(51) Int. Cl.: B32B 15/02, B32B 15/20, E01C 13/00, E01H 5/10, H05B 3/36

(54) **Thermal cloth, in particular for football fields**

(30) Priority: 20.07.2012 IT BG20120028 U
(71) Applicant: Promix S.r.l., 24040 Bonate Sotto (BG) (IT)
(72) Inventor: Vero, Enrico, I-24040 Bonate Sotto, BERGAMO (IT)
(74) Representative: Chimini, Francesco

(57) **Abstract**

Thermal cloth for football fields, comprising: a polyvinyl chloride sheet; an electrical heating resistor cable glued on top of said polyvinyl chloride sheet according to predetermined pattern and distances; an aluminium sheet glued on top of said polyvinyl chloride sheet and of said heating resistor cable; a control system for supplying said heating resistor cable; said thermal cloth is positioned on said football field with said aluminium sheet placed upwards.

## Description

The present invention relates to a thermal cloth, in particular for football fields.

In winter, a football field made of natural grass, as well as those made of synthetic grass have to overcome a series of significant problems such as cold, snow and ice which make the field impracticable.

A solution to tackle these problems may be represented by an underground heating system which makes the playing surface perfectly usable even in critical conditions and favours the vegetative growth, which would otherwise be blocked by low temperatures.

If the football field is not provided with the underground heating system, an important aid is represented by cloths of plastic material which cover the football field and must be removed before the game. These cloths form a coat which reduces winter harshness.

In the event of snow, before removing the plastic cloths, the snow must be shovelled off the field and a considerable number of workers and of mechanical shovels are used to this end. Among the other things, the latter may also damage the field.

The object of the present invention is to provide a thermal cloth for football fields which overcomes the prior art drawbacks.

Another object is to provide an easy to make thermal cloth.

According to the present invention, these and other objects are achieved by a thermal cloth for football fields comprising: at least one waterproof support sheet, for example made of polyvinyl chloride; an electrical heating resistor cable glued on top of said waterproof support sheet or incorporated between two waterproof support sheets coupled to each other, an aluminium sheet glued on top of said waterproof support sheet and of said heating resistor cable; a control system for supplying said heating resistor cable; said thermal cloth is positioned on said football field with said aluminium sheet placed upwards.

Further features of the invention are described in the dependent claims.

A thermal cloth is obtained thanks to the present invention which, in the event of snow, avoids the need of shovelling off the snow, and thus avoids the need of providing for workers and equipment to this end. As soon as the snow touches the cloth, it melts and the resulting water is drained through the slopes of the same field and the holes present in the cloth.

Since the snow needs not be shovelled off, there is no risk to damage the underlying grass blanket. Snowdrifts resulting from the snow shovelling on the side of the field do not form and/or the snow shovelled off needs not be removed.

The thermal cloth of the present invention must reach a reasonable temperature and therefore has a low consumption, unlike the underground heating systems which require a much higher energy consumption to reach a similar temperature.

The features and the advantages of the present invention will appear more clearly from the following detailed description of a practical embodiment thereof, made by way of a non-limiting example with reference to the accompanying drawings, in which:

figure 1 schematically shows a sectional view of a thermal cloth for football fields according to the present invention;

figure 2 schematically shows a transparency top view of a thermal cloth for football fields according to the present invention;

figure 3 schematically shows a football field with reels of a thermal cloth for football fields on the field sides, and a single exemplary thermal cloth is shown stretched out on the field, according to the present invention;

figure 4 schematically shows a sectional view of a thermal cloth for football fields according to the present invention in an embodiment variant.

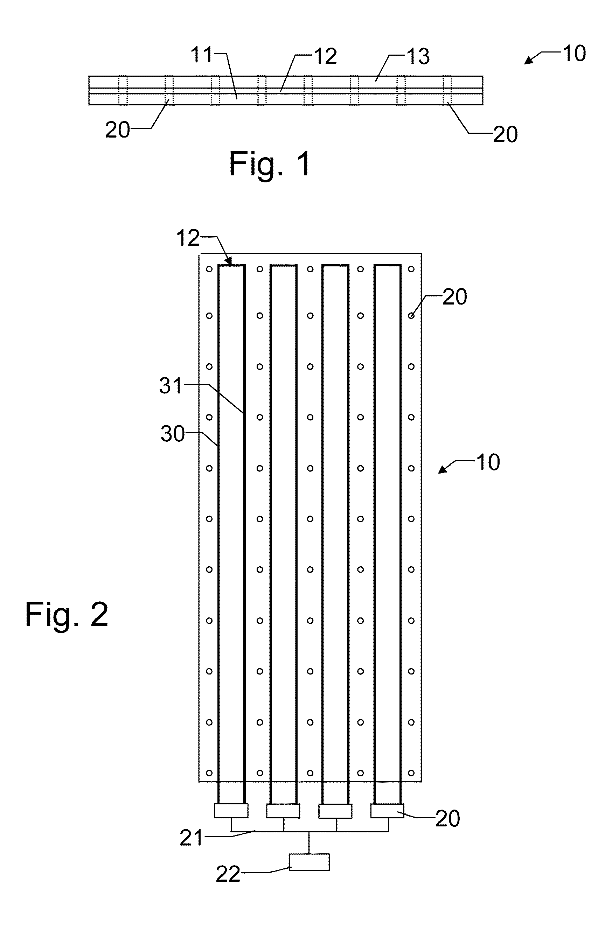

With reference to the accompanying figures 1-3, a thermal cloth 10 for football fields, seen in section, according to the present invention and in a first embodiment, comprises a waterproof support sheet 11, for example made of polyvinyl chloride (PVC), preferably reinforced with a mesh and therefore having a high resistance, for example weighing 220 g/m², and in any case with a weight in the range between 200 and 400 g/m², and with a thickness in the range between 0.5 and 3 mm.

Other materials may be used as an alternative to the polyvinyl chloride (PVC) sheet 11 provided they have an equivalent resistance, for example a rubbed on polyester fabric.

An electrical heating resistor cable 12 is applied on top of sheet 11. For example, a resistor cable may be used having a diameter of 1.60/1.65 mm, coupled with a harmonic steel conductor having a diameter of 0.40/0.45 mm or other alloys suitable for the purpose, the whole covered with a 1.2 mm PVC insulation or other suitable insulating material, or suitable heating cables or tapes.

In one embodiment, the heating resistor cable 12 is a stranded cable, in particular formed with seven copper-coated steel wires.

An aluminium sheet 13, preferably pre-prepared and/or reinforced with a mesh, for example of glass fibre, is applied on top of the heating resistor cable 12 in order to increase its resistance.

The thickness of the aluminium sheet 13 is in the range between 0.012 and 0.020 mm. However, the thickness of the aluminium sheet 13 may even be larger if a higher heat diffusion is needed. Other sheets of heat conductor material may be used as an alternative to the aluminium sheet 13.

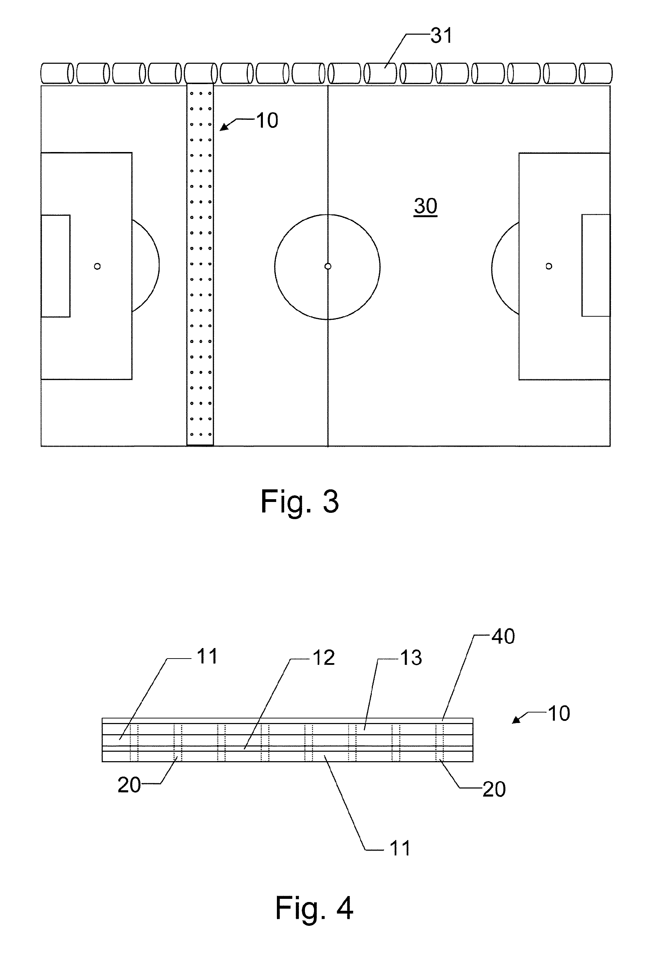

In an embodiment variation shown in figure 4, the heating resistor cable 12 is incorporated between two waterproof support sheets 11, for example both of polyvinyl chloride (PVC), coupled to each other, for example by welding or heat gluing. In this case, the aluminium sheet 13 is applied on one of the two waterproof support sheets 11, the one facing upwards.

In one embodiment, the outer side of the aluminium sheet 13, i.e. the floor side, is coated with a protective sheet 40, for example a transparent polyester sheet, which has the function of protecting the aluminium sheet 13 from scratches or other types of cuts.

In one embodiment, sheets 11 and 13 and the heating resistor cable 12 are glued to each other, preferably by means of the EVA (Ethyl Vinyl Acetate) glue, which is an adhesive formed by heat-melting sheets, or similar high tenacity adhesives.

Thus, an Ethyl Vinyl Acetate sheet is placed between one layer and the other to be glued and then it is heated and the layers become glued or, as an alternative with glues suitable for the purpose or hot or ultrasound welding.

The set of sheets 11 and 13 and the resistor cable 12 creates a thermal cloth having a total thickness in the range between 1.5 and 5 mm, and is therefore flexible and suitable for being rolled up.

The thermal cloth 10 is then pierced with holes having a diameter equal to 2 mm and in any case in the range between 1 and 5 mm, with a density equal to 100 holes per square metre and in any case in the range between 50 and 150 holes per square metre.

The thermal cloth 10 is made with cloths having a width of 3-5 m and length equal to the dimensions of a football field, which have a variable length from 30 to 100 m. While figure 3 shows cloths 10 which form strips parallel to the smaller sides of a football field, cloths 10 may also have such a length as to be positioned parallel to the larger sides of the field. In one embodiment, the heating resistor cable 12 forms a delivery line 30 and a return line 31, arranged parallel to the longer side of the thermal cloth 10.

Preferably, the delivery line 30 is jointed to the return line 31 at an end thereof, while the terminals at the other end are connected to a supply connector 20.

The distance between the delivery line 30 and the return line 31 is in the range between 5 and 15 cm, depending on the temperature to be reached. For example, the distance will be shorter in colder fields. Each pair of lines 30, 31 is next to other pairs of lines always at the distance in the range between 5 and 15 cm, up to occupy the whole cloth 10.

Then, there is a plurality of supply connectors 20 placed on the field sides, which are supplied by a connection cable 21, controlled by a control and supply centre 22.

In an advantageous embodiment, temperature probes are provided, for example a probe for monitoring the cloth temperature and a probe for monitoring the ground temperature, connected to the control and supply centre 22.

According to the needs, the control centre 22 supplies the heating tape 12 either continuously or intermittently depending on the temperature to be reached. The supply may also be distributed by supplying some pairs of lines 30, 31, and other not.

In one embodiment, the control and supply centre 22 is suitable for managing in parallel a plurality of thermal cloths 10 which cover a football field. Advantageously, for example depending on the temperature values detected by the probes, only some cloths 10 may be supplied among all those covering the field.

The heating resistor cable 12 will be supplied at a mains voltage of 220Vac (or 380Vac), since the cloth will be laid on a field with no people nearby, or at a low voltage of ≤ 48 Vac.

The power required may be in the range between about 90 W/m² and about 250 W/m², according to the geographical areas where the thermal cloth 10 is used, and the control system is capable of modulating both the distribution of the cloths to be heated and the current flow. Therefore, the possibility of using also lower powers which allow the use of the electrical power already installed in the various structures which normally have from 50 to 150 KWh.

The thermal power may be changed either with a different number of heating cables 12 or by changing the resistivity of said cables.

The thermal cloth 10 must be laid on the football field with the aluminium sheet 13 facing upwards.

Since the aluminium sheet 13 is a heat conductor, it allows the temperature on cloth 10 to be made even and prevents having high temperatures only in the proximity of the heating resistor cable 12 and lower temperatures elsewhere.

Moreover, the aluminium sheet 13, placed on top of the heating resistor cable 12, exerts a heat reflecting effect and allows the heat irradiation downwards too, i.e. towards the grass blanket, protecting it from freeze and without providing high temperatures which may damage the same.

Irrespective of the atmospheric temperature, the management and control system 22 allows a controlled temperature of the cloth of about 3°C, and in any case in the range between 1°C and 5°C.

In the event of snow, such temperature is sufficient to melt the snow when it touches the thermal cloth 10 or to protect the grass blanket in the event of freeze.

The slope typical of football fields is used for draining the water but the holes present in cloth 10 favour the drainage.

In particular, the number of holes must not be too large as a good drainage would require, but a number of holes lower than expected creates a surface water film which facilitates the snow melting.

Thanks to its flexibility, the thermal cloth 10 may be rolled up and unrolled on the football field 30 by means of manual or automatic reels 31 placed on the field sides.

Several thermal cloths next to each other will be used to entirely cover a field.

So far it has been mentioned that the thermal cloth 10 is used for covering football fields but it may also be used for other uses, such as for example for covering terraces and galleries, so as to avoid having to shovel off the snow. In this case, the holes may be missing.

The thermal cloth 10 may advantageously be stretched out on the pressure structures to prevent snow loads.

## Claims

1. Thermal cloth for football fields, comprising: at least one waterproof support sheet, for example made of polyvinyl chloride; an electrical heating resistor cable glued on top of said waterproof support sheet or buried between two waterproof support sheets coupled to each other, an aluminium sheet glued on top of said at least one waterproof support sheet and of said heating resistor cable; a control system for supplying said heating resistor cable; said thermal cloth being suitable for being positioned on said football field with said aluminium sheet placed upwards.

2. Thermal cloth according to claim 1, **characterized in that** said thermal cloth has an overall thickness in the range between 1.5 and 5 mm.

3. Thermal cloth according to claim 1, **characterized in that** said heating resistor cable is glued on top of said waterproof support sheet by means of an Ethyl Vinyl Acetate sheet or suitable adhesives.

4. Thermal cloth according to claim 1, wherein said heating resistor cable is positioned between two waterproof support sheets glued or welded to each other.

5. Thermal cloth according to claim 1, **characterized in that** said aluminium sheet is glued on top of said waterproof support sheet and of said heating resistor cable by means of an Ethyl Vinyl Acetate sheet or suitable adhesives.

6. Thermal cloth according to claim 1, **characterized in that** said thermal cloth comprises a plurality of through holes.

7. Thermal cloth according to claim 6, **characterized in that** said thermal cloth comprises a plurality of through holes with a density in the range between 50 and 150 holes per square metre.

8. Thermal cloth according to claim 6, **characterized in that** said each of said plurality of through holes has a diameter in the range between 1 and 5 mm.

9. Thermal cloth according to claim 1, **characterized in that** said control system comprises means for periodically interrupting the supply of said heating resistor cable.

10. Thermal cloth according to claim 9, **characterized in that** said means for periodically interrupting the supply of said heating resistor cable so that the temperature of said aluminium sheet is in the range between 1°C and 5°C.

11. Thermal cloth according to any one of the preceding claims, wherein a protective sheet is applied on the side of the aluminium sheet facing upwards, for example made of transparent polyester.

12. System for heating a surface exposed to snow or ice, comprising a plurality of thermal cloths according to any one of the preceding claims and a control and supply unit of said cloths, the thermal cloths being connected to each other in parallel so as to be individually controllable by said control and supply unit.

13. Heating system according to the preceding claim, comprising temperature probes connected to said control and supply unit for monitoring the temperature of the thermal cloths and/or of the ground.
